# EUROPÄISCHE PATENTSCHRIFT

(11) **EP 2 620 734 B1**
(45) Veröffentlichungstag und Bekanntmachung des Hinweises auf die Patenterteilung: **09.01.2019**
(21) Anmeldenummer: 12188021.5
(22) Anmeldetag: 10.10.2012
(51) Int. Cl.: F27B 17/02, A61C 9/00, A61C 19/00, A61C 13/15, A61C 13/20, A61C 13/00

(54) **Dentalofen**
Dental oven
Four dentaire

(30) Priorität: 27.01.2012 EP 12152931
(43) Veröffentlichungstag der Anmeldung: 31.07.2013
(73) Patentinhaber: Ivoclar Vivadent AG, 9494 Schaan (LI)
(72) Erfinder: Jussel, Rudolf, 6805 Feldkirch-Gisingen (AT); Rohner, Gottfried, 9450 Altstätten (CH); Brotzge, Michael, 6842 Koblach (AT); Lorünser, Johannes, 6700 Bludenz (AT)
(74) Vertreter: Baronetzky, Klaus

(56) Entgegenhaltungen:
- EP-A1- 2 550 929
- JP-A- 2002 062 117
- US-A- 4 963 709

## Beschreibung

Die Erfindung betrifft einen Dentalofen, gemäß dem Oberbegriff des Anspruchs 1, sowie ein Verfahren zum Steuern bzw. Regeln eines Dentalofens, gemäß dem Oberbegriff von Anspruch 16.

Es sind seit längerem Brennöfen für Dentalzwecke bekannt, bei denen Dentalrestaurationsteile über speziell vorgegebene Brenn-, Sinter-, Entbinderungs- und/oder Pressparameter gebrannt, gesintert, entbindert oder verpresst werden. Es ist in diesem Zusammenhang auch bekannt, dass die Qualität der erzeugten Dentalrestaurationsteile stark von der Einhaltung der genannten Prozessparameter über den gesamten Prozess hinweg abhängt.

Bei Brennöfen werden Dentalrestaurationsteile typischerweise je einzeln oder gemeinsam auf einem Brennraumboden oder Sockel abgelegt. Zum Brennen wird eine Brennhaube, die die Heizung für den Ofen aufweist, mit dem Brennraumboden zusammengeführt und in der Regel abgedichtet, so dass der Brennzyklus starten kann. Hierbei ist es vorteilhaft, wenn die Brennhaube selbst hub- und/oder schwenkbeweglich gelagert ist, da dann Erschütterungen des Brennraumbodens und damit einhergehende Erschütterungen der Dentalrestaurationsteile sicher vermieden werden können.

Sobald die Brennhaube geschlossen ist, kann mit dem eigentlichen Brenn-, Sinter-, Entbinderungs- oder Pressprozess begonnen werden, wobei typischerweise sicherheitshalber eine Haltezeit eingeschoben wird.

Nachdem sowohl bei Brennöfen, Sinteröfen, Entbinderungsöfenals auch bei Pressöfen die verwendeten Materialien empfindlich auf eine Nicht-Einhaltung von Prozessparameter, insbesondere Temperatur und Druck, reagieren, werden üblicherweise mehrere Sensoren, insbesondere Drucksensoren und/oder Temperatursensoren eingesetzt, um den genauen Verlauf der Prozessparameter zu erfassen und gegebenenfalls regelnd einzugreifen.

Grundsätzlich kann insbesondere ein Brenn-, Entbinderungs- und oder Sinterprozess in mehrere Unterabschnitte aufgeteilt werden, so. z.B. in einen Trocknungsprozess, bzw.-Entbinderungsprozess, gefolgt vom eigentlichen Brenn- bzw. Sinterprozess, wiederum gefolgt von einem Abkühlprozess.

Trocknungsprozesse werden meist bei einem noch vollständig bzw. teilweise geöffnetem Brennofen durchgeführt, analoges gilt für Abkühlprozesse.

Dies ist insbesondere von Bedeutung bei der Verarbeitung von, durch die Herstellung bedingt noch feuchten Dentalkeramiken (z.B. Schichtkeramiken, Glasieren, Glaslot, etc.) oder Keramiken, bei welchen Aufheizgradienten zur Vermeidung von Schäden z.B. durch Risse, Blasen, Porositäten, unvollständige Verdampfung oder Verbrennung von organischen Materialien und/oder Aufheiz- und Abkühlgradienten zur Begrenzung von Spannungen in der Keramik selbst, oder durch unterschiedliche Temperaturgradienten zwischen unterschiedlichen Gerüstwerkstoffen (Metall oder Keramik) und den aufgebrachten Schichtwerkstoffen oder Verblendungen wichtig sind.

Standardmässig arbeiten heutige Geräte mit empirisch ermittelten Einstellungen. Das Schließen oder Öffnen der Brennhaube erfolgt in einem vorgegebenen Prozess z.B. in einer vorgegebenen Zeit und mit einer vorgegebenen Schliessbewegung z.B. linear oder über fest vorgegebene Positionen. Dabei kann die Brennhaube bereits auf eine vordefinierte Temperatur beheizt werden oder frei abkühlen.

Es ist bereits vorgeschlagen worden, empirisch erarbeitete Modelle zu verwenden, gemäß welchen beispielsweise auf Basis der im Ofenkopf gemessenen Temperatur die Wärmeenergie und die zu erwartende Erwärmung als Funktion des Abstandes der heissen Brennhaube zu dentalen Objekt hin geschätzt werden und die Schliessbewegung auf Basis von experimentell ermittelten Modellen angepasst wird.

Ferner ist es vorgeschlagen worden, Thermoelemente zu verwenden, die sich im Ofenkopf oder Brennsockel, und zwar in der Nähe des Arbeitsbereiches von zu verarbeitenden dentalen Restaurationen befinden, dennoch aber die Temperatur dieser Objekte nicht exakt wiedergeben können. Es ist schwierig, diese Sensoren entsprechend den Gegebenheiten auszurichten. Ein Thermoelement müsste an einem dentalen Objekt angebracht werden, was in der Praxis nicht durchführbar ist.

Schließlich ist es auch vorgeschlagen worden, ein optisches Temperaturinstrument auf das Objekt z.B. unter Zuhilfenahme eines Lichtstrahles (Laserpointer) auszurichten, um einen repräsentativen Messwert für die Temperatur des Objektes zu erhalten.

Nachteilig ist bei diesen beschriebenen Varianten, dass eine fehlerhafte Anbringung von Sensor und/oder Dentalobjekt zu einem grossen Messfehler führen kann. Zudem ist die Anbringung der Sensoren teilweise schwierig, z. B. wenn das Objekt eine pulverförmige Konsistenz besitzt. Zudem erschließt sich die Messposition der Sensoren dem Anwender/Bediener, d.h. in der Regel dem Zahntechniker, nicht, was in besonderen Maße gilt, wenn mehrere dentale Restaurationen und/oder grössere dentale Restaurationen zu verarbeiten sind.

Bekannte Dentalöfen sind aus der EP2550929 und JP2002062117 bekannt.

Im Hinblick auf die bestehenden Probleme und auch auf die Haftungsrisiken durch fehlerhaft gebrannte Dentalrestaurationsteile wird in der Regel mit erheblichen Sicherheitsreserven gebrannt, also mit verlängerten Haltezeiten, während derer das Temperaturniveau sich angleichen soll. Die Festlegung von verlängerten Haltezeiten wird dabei teilweise dem Anwender überlassen. Hierbei wird jedoch eine Verschlechterung der Eigenschaften der für das Brennen das Dentalrestaurationsteils verwendeten Keramik in Kauf genommen.

Demgegenüber liegt der Erfindung die Aufgabe zugrunde, einen Dentalofen gemäß dem Oberbegriff von Anspruch 1 sowie ein Verfahren gemäß dem Oberbegriff von Anspruch 16 zu schaffen, die eine verbesserte Qualität der herzustellenden Dentalrestaurationsteile erlauben.

Diese Aufgabe wird erfindungsgemäß durch die Ansprüche 1 bzw. 16 gelöst. Vorteilhafte Weiterbildungen ergeben sich aus den Unteransprüchen.

Erfindungsgemäß ist bei einem Dentalofen eine Wärmeerfassungsvorrichtung, die als Wärmebildkamera ausgebildet ist, auf den Bereich oberhalb des Brennraumbodens oder der Unterlage gerichtet, auf der das Dentalrestaurationsteil angeordnet ist. Die Wärmebildkamera ist damit auf den Arbeitsbereich, in welchem Dentalrestaurationsteile positioniert werden können, gerichtet, vorzugsweise von seitlich außerhalb des Dentalofens, und vermag dessen Wärmestrahlung zweidimensional zu erfassen.

Die zweidimensionale Aufnahme durch die Wärmebildkamera ermöglicht die Erfassung einer Wärmematrix, also einer Matrix aus Punkten, die je eine Temperatur an einer vorgegebenen Stelle wiedergeben. Bei entsprechender Auflösung können auch noch kleinstmögliche dentale Objekte noch sicher erfasst und deren Temperatur gemessen werden. Dies bietet eine Vielzahl von Vorteilen:
Während mit einem einfachen Temperatursensor in der Regel nur eine punktförmige Temperaturerfassung möglich ist, ermöglicht die zweidimensionale Temperaturerfassung auch gleich die Erfassung der Temperaturverteilung. Dies ermöglicht auch eine Erkennung der Form, der Grösse, der Position, der Anzahl eventuell sogar der Art der zu verarbeitenden Dentalrestaurationsteile.

Erfindungsgemäß ist es günstig, dass die Temperatur an einem oder mehrehren dentalen Objekten unabhängig von deren Form, Grösse, Masse, Anzahl und Materialisierung an einer oder mehreren Positionen im Arbeitsbereich, d.h. dem Brennraum des Ofens an einer repräsentativen oder aber für den Prozess relevanten Position gemessen werden kann.

Erfindungsgemäß können innerhalb der gesamten Temperaturmatrix die relevante Information, z. B. die dentalen Restaurationsteile erfasst und erkannt werden und von nicht relevanten Informationen, z.B. Störungen im Hintergrund, oder von Bauteilen des Dentalofens unterschieden werden.

Bevor die Dentalrestaurationsteile eingesetzt sind, ist die Wärmebildkamera bei einem Ofen mit geöffneter Haube auf die Umgebung gerichtet, die typischerweise auf Umgebungstemperatur ist. Wenn die Dentalrestaurationsteile - üblicherweise platziert auf einem Brenngutträger, welcher das Einstellen bzw. die Entnahme erleichtert -, auf den Ofenboden aufgesetzt werden, kann zum einen erkannt werden, dass der heisse Ofensockel nun abgedeckt wurde. Damit kann das Einstellen eines Brenngut-Trägers erkannt werden. Bei der Entnahme eines Trägers würde dies wiederum erkannt werden, weil der Brennsockel gegenüber dem Träger eine Temperaturdifferenz besitzt. Die beim Einstellen noch nicht erwärmten Dentalrestaurationsteilen, welche in etwa die Temperatur der Umgebung bzw. des Brenngutträgers, auf welchem Sie platziert sind, haben, führen in den ersten Sekunden noch zu keiner Bildänderung. Erst wenn die über den Dentalrestaurationsteilen sich erstreckende heiße Ofenhaube und der Brennsockel, auf welchem der Brenngutträger mit den Objekten steht, die Dentalrestaurationsteile etwas erwärmt, zeichnet sich deren Kontur gegenüber dem Hintergrund als Wärmematrix ab.

Dadurch lassen sich während des Aufheizvorgangs, gerade in die vorgewärmte Brennkammer eingebrachte und sich auf niedriger Temperatur (meist in der Nähe der Umgebungstemperatur) befindende Dentalrestaurationsteile, beispielsweise während des Trocknungsprozesse, identifizieren und dann die relevante Temperatur dieser oder auch die Temperaturverteilung dieser Objekte ermitteln und überwachen.

Erfindungsgemäß besonders günstig ist es, dass die so gewonnenen Ergebnisse und Erkenntnisse ohne jeglichen Zusatzaufwand und ohne weiteres für die Steuerung bzw. die Regelung des Ofens verwendet werden können. Bei bekanntem und ortsfestem Abstand der Wärmebildkamera vom Brennraumboden bzw. Arbeitsbereich lässt sich aus der Größe der Wärmematrix ohne weiteres auch die Größe der eingestellten Objekte abschätzen und trigonometrisch berechnen.

Damit lassen sich dann gewünschte Prozessparameter, welche größenabhängig sein können, ebenfalls und automatisch in der gewünschten Weise einstellen. So z.B. kann bei Feststellen von grossen Dentalrestaurationsteilen oder mehreren Dentalrestaurationsteilen die Aufheizrate, d.h. der gewünschte Temperaturanstieg, an dem Objekt reduziert werden, um eine schonende und sichere Trocknung zu erreichen.

Auch bei mehreren Objekten kann aufgrund vorgegebener Methoden der Prozess sicher gestaltet werden. So kann beispielsweise auf das Temperaturmaximum geregelt werden, um Poren und Risse bei einer Trocknung zu verhindern. In anderen Fällen kann z.B. eine Mittelwertbildung der identifizierten und relevanten Temperaturmesspunkte von Vorteil sein. In weiterer Ausgestaltung ist es vorgesehen, dass an allen identifizierten Messpunkten eine Mindesttemperatur erreicht sein muss, bevor sich ein Folgeprozess anschliesst.

Grundsätzlich wäre es auch möglich, bei entsprechender Ausrichtung der Wärmebildkamera weitere Informationen, wie Art des verwendeten Trägers, auf welchem die Dentalrestaurationsteile im Brennofen positioniert sind, zu erfassen, ebenso wie auch dessen Grösse und/oder dessen Temperatur. Diese Informationen können im aktuellen Prozessschritt, aber auch in einem nachfolgenden Prozessschritt, z.B. dem Brennprozess, erfindungsgemäß verwendet werden. So lassen sich die Fehler durch unterschiedliche Grössen und Massen von Brennträgern ausschalten und die zu erreichende Endtemperatur der Dentalrestaurationsteile während des Brennprozesses bleibt unabhängig von diesen.

Die Identifikation eines Brenngutträgers kann erfindungsgemäß in analoger Weise wie bei den Dentalrestaurationsteilen erfolgen.

Zugleich erlaubt die erfindungsgemäße Wärmebildkamera eine Regelung der Vorwärmung und/oder der Kühlung auf Basis der an den Objekten erfassten Temperatur, durch Verändern der Position des Ofenkopfes gegenüber dem Ofenboden oder der Veränderung der Ofentemperatur im Ofenkopf durch Heizen oder Kühlen oder gleichzeitiger Veränderung der Position und der Heizleistung. Auch die Temperatur selbst und die Temperaturverteilung im von der Wärmebildkamera erfassten Bereich lassen sich erfassen.

Es versteht sich, dass in gleicher Weise natürlich auch die Stellung der Ofenhaube relativ zu den Dentalrestaurationsteilen geregelt werden kann. So kann auch die Absenkung der Ofenhaube gesteuert und geregelt werden, um die Temperatur bzw. den Temperaturanstieg an den zuvor identifizierten Dentalrestaurationsteilen einem vorgegebenen Sollverlauf folgen zu lassen.

Erfindungsgemäß besonders günstig ist es, dass aufgrund des Temperaturverlaufs festgestellt wird, ob eventuelle für die Verarbeitung und Herstellung notwendige Liquids (z.B. Restwasser) verdunstet sind und dann, gegebenenfalls nach Einschieben einer gewissen Haltezeit, das Absenken der Haube bzw. die Temperaturerhöhung weiter und automatisch fortgesetzt werden kann.

Ebenso kann erfindungsgemäß durch die Wärmebildkamera mit der Steuer- und Regelvorrichtung sichergestellt werden, dass unabhängig von Art, Anzahl und Masse der Dentalrestaurationsteile eine vorgegebene Temperatur oder Temperaturverteilung sicher erreicht wurde. Dies ermöglicht eine auf die Erfordernisse der Keramiken zugeschnittene Prozessdauer, und zwar ohne die bereits eingangs erwähnten Sicherheitsreserven, aber auch, ohne Risiken einzugehen.

Durch den zwangsläufig auftretenden Temperaturunterschied zwischen dem Hintergrund und den Dentalrestaurationsteilen lässt sich der Hintergrund gleichsam elektronisch ausblenden: über einen entsprechenden Filter bzw. Bilddatenverarbeitungsroutinen wird kurzerhand die Erfassung auf diejenigen Matrixzellen beschränkt, deren Temperatur die Raumtemperatur übersteigt.

Im Betrieb eines Brennofens wird der Zahnersatz, die Krone oder die Brücke oder eine entsprechende Mehrfachanordnung bei geöffneter Ofenhaube, aber eingeschalteter Ofenheizung auf dem Brennraumboden abgelegt. Auch wenn die Ofenheizung von dem Dentalrestaurationsteil dann noch ein gutes Stück beabstandet ist, erfolgt eine Wärmeübertragung, die dazu führt, dass sich die Dentalrestaurationsteile langsam erwärmen. Bereits in diesem Zustand lässt die Wärmebildkamera, die auf den Bereich knapp oberhalb des Brennraumbodens gerichtet ist, erkennen, dass dort Dentalrestaurationsteile liegen, aber auch deren Form in der zweidimensionalen Projektion betrachtet.

Aus dem Verlauf der Erwärmung lässt sich dann auch in gewissem Maße auf die Masse der Dentalrestaurationsteile schließen.

Es versteht sich, dass dieses Prozedere in gleicher Weise anwendbar ist, wenn der Brennofen bei noch ausgeschalteter Heizung aufgrund des vorherigen Brennzyklus noch warm ist. In diesem Fall gibt typischerweise sowohl der Brennraumboden als auch die - geöffnete - Haube Wärme an die Dentalrestaurationsteile ab, die sich hierdurch wärmebildmäßig von dem auf Raumtemperatur befindlichen Hintergrund abheben.

In gleicher Weise lässt sich die Wärmebilderkennung im Falle eines Pressofens unter Verwendung einer Muffel durchführen. Typischerweise wird eine Muffel mit eingesetztem Rohling in einem Vorwärmofen erwärmt, typischerweise auf 850 °C. Wiederum kann der eigentliche Pressofen dann von dem vorherigen Presszyklus noch warm sein. Bei geöffneter Ofenhaube wird die heisse Muffel in an sich bekannter Weise auf den Brennraumboden aufgesetzt. Die heisse Muffel führt auch hier zu einer Veränderung der Temperatur an Matrixelementen, die zuvor Umgebungstemperaturen, bzw. Temperaturen des Hintergrundes erfasst haben. Dies ermöglicht auch hier, durch Auswertung der zeitlichen Veränderung der einzelnen Wärmebilder das Einsetzen der Muffel zu erkennen.

Die so gewonnenen Informationen lassen sich in ausgesprochen einfacher Weise für die Steuerung des Ofens während des Schließvorgangs der Brennhaube verwenden, wobei es sich versteht, dass auch Sicherheitsüberwachungen oder das Auslösen von Alarmen ohne weiteres darstellbar sind.

Lediglich als Beispiel hierfür sei die Konstellation beschrieben, wenn eine Muffel außermittig im Brennraum platziert ist. Die Wärmebildkamera kann sofort erfassen, wenn die warme Matrix seitlich versetzt ist und dann einen Alarm abgeben bzw. den Benutzer zur Korrektur auffordern. Auch wenn der Versatz nicht seitlich, sondern in Wärmestrahlungsrichtung erfolgt, ist dies aber erfassbar: Dies dadurch, dass eine ortsfest gegenüber der Aufstellposition der Pressmuffel montierte Kamera gleichzeitig die geometrische Grösse des Objektes bestimmen kann. Befindet sich das Objekt aussermittig und zu nahe an die Kamera erscheint es grösser im Bild, ist es weiter weg, erscheint es kleiner.

Die Steuerung bzw. die Regelung des Brennofens oder des Pressofens erfolgt erfindungsgemäß automatisch größenabhängig, temperaturabhängig und zeitabhängig; wobei sowohl die Größe des Dentalrestaurationsteils bzw. der Muffel als auch deren Temperatur erfindungsgemäß von der Wärmebildkamera erfasst werden.

In erfindungsgemäß besonders günstiger Ausgestaltung ist es vorgesehen, das Wärmebild auch - gegebenenfalls elektronisch aufbereitet - auf einem Bildschirm des Ofens oder einem Bildschirm, der mit dem Ofen in Verbindung steht, darzustellen. Hierdurch lässt sich eine auch visuelle Plausibilitätskontrolle realisieren. In einer weiteren Ausprägung ist es vorgesehen, dass der Zahntechniker dieses Bild bearbeitet und gegebenenfalls sogar interaktiv eingreift, z.B. um die von der Wärmebildkamera festgelegte Vorauswahl der Objekte abzuändern, oder den Messpunkt für die Prozessführung manuell festzulegen oder zu verschieben.

Typischerweise ist die Wärmebildkamera so ausgerichtet, dass sie schräg hinten an dem Ofen angebracht ist und diesen insbesondere schräg nach vorne erfasst. An der dem Brennraum oben von der Wärmebildkamera aus gesehen gegenüberliegenden Seite sind typischerweise keine Wärmequellen, die die Erfassung durch die Wärmebildkamera beeinträchtigen könnten. Dennoch vorhandene Wärmequellen, wie beispielsweise ein zufälligerweise in Blickrichtung der Kamera stehender, geöffneter und dementsprechend heißer Brennofen kann dennoch vom Dentalrestaurationsteil unterschieden werden. Dies deshalb eine fremde Wärmequelle einen anderen zeitlichen Temperaturverlauf hat als in den erfindungsgemäßen Dentalofen eingestellte Dentalrestaurationsteile. Die genannte Position der Kamera ist auch günstig, weil es dadurch dem Anwender erschwert wird, versehentlich störende Objekte zwischen Kamera und den zu erfassenden Dentalrestaurationsteilen einzubringen.

In diesem Zusammenhang sind natürlich auch Plausibilitätsprüfungen realisierbar, die beispielsweise große Temperaturen zu Beginn der Wärmebehandlung als nicht plausibel eliminieren. Auch kann beispielsweise über eine Handbewegung zwischen dem Hintergrund der Wärmebildkamera und dem Ofen die Hintergrundunterscheidung erleichtert werden, da die entsprechenden Temperaturgradienten bei nacheinander aufgenommenen Wärmebildern in vom dentalen Objekt nicht abgedeckten Matrixelementen erkennbar sind.

Erfindungsgemäß lässt sich sowohl die absolute Temperatur des Brennguts als auch die Entwicklung bzw. die Veränderung der Temperatur an dem je betrachteten Matrixelement erfassen und auswerten.

Auch ist eine Überwachung über den eigentlichen Aufwärmvorgang hinaus möglich. Typischerweise darf sich das Brennobjekt während des Prozesses hinsichtlich seiner Position nicht verändern. Auch diese Tatsache lässt sich mit der erfindungsgemäßen Wärmebildkamera für die Fehlerüberwachung einsetzen.

Während in günstiger Weise die Achsausrichtung der Wärmebildkamera exakt horizontal ist und die vertikale Mittenachse des Brennofens bzw. Pressofens schneidet, ist es in erfindungsgemäß modifizierter Ausgestaltung auch möglich, die Wärmebildkameraachse zu neigen, beispielsweise um bis zu 15° nach oben oder unten, um gegebenenfalls eine noch bessere Unterscheidbarkeit oder eine verbesserte Erfassung der Dentalrestaurationsteile zu realisieren.

In einer weiter modifizierten Ausgestaltung ist die Wärmebildkamera für einen Brennofen entlang eines Kreissegments von beispielweise 90° verschwenkbar. Durch die unterschiedlichen Positionen lassen sich damit dreidimensionale Wärmebilder der sich erwärmenden Dentalrestaurationsteile anfertigen und entsprechend auswerten.

Gegebenenfalls kann die erfindungsgemäße Wärmebildkamera auch bei abgesenkter Ofenhaube arbeiten. Hierzu ist ein hinsichtlich Infrarotstrahlung durchlässiges Sichtfenster, in der Brennhaube vorgesehen, as einen möglichst langen Sichtkontakt mit den zu messenden Objekten auch bei sich absenkender Brennhaube erlaubt.

In einer weiteren Ausgestaltung ist die Kamera an der Brennhaube angebracht, wobei sich dann die ortsbezogenen Daten mit der Position der Ofenhaube ändern. Dies kann aber bei Anbringung einer Positionserfassungseinrichtung für die Brennhaube entsprechend berücksichtigt werden, und kann auch laufend für die Steuerung und Regelung des Prozesses berücksichtigt werden.

Besonders günstig ist es, wenn die Steuervorrichtung die einzelnen Matrixelemente der Matrix sowohl hinsichtlich der erfassten Temperatur als auch hinsichtlich der Anordnung, also, an welchen Stellen warme Bereiche sind und an welchen nicht, auswertet, und für eine Prozessführung als relevant oder nicht relevant identifiziert. Hierzu kann sie zum Beispiel einen warmen Bereich, der eine hochrechteckige Form aufweist, als warme Muffel identifizieren.

In vorteilhafter Ausgestaltung ist es vorgesehen, dass die als relevant identifizierten Matrixelemente auf beliebige mathematische Weise wie z. B. über die Bildung eines Mittelwerts, eines Maximalwerts, eines Mittelwerts von Maximalwerten einzelner indentifizierter Restaurationen, beispielsweise auch unter Berücksichtigung der Anzahl der Matrixelemente und damit der Grösse bzw. Anzahl der Objekte, zu einem Vorgabewert für die Regelung verrechnet werden.

In vorteilhafter Ausgestaltung ist es vorgeshen, dass die Steuervorrichtung die einzelnen Matrixelemente der Matrix sowohl hinsichtlich der erfassten Temperatur als auch hinsichtlich der Anordnung, also, an welchen Stellen warme Bereiche sind und an welchen nicht, auswertet, und für eine Prozessführung als relevant oder nicht relevant identifiziert.

In vorteilhafter Ausgestaltung ist es weiter vorgesehen, dass die Steuer- oder Regelvorrichtung das Wärmebild des erfassten Objekts, insbesondere des erfassten Dentalrestaurationsteils, hinsichtlich seiner relativen Lage bezogen auf die Unterlage und/oder die Brennhaube und damit den Dentalofen erfasst und auswertet.

In vorteilhafter Ausgestaltung ist es vorgesehen, dass die Steuer- oder Regelvorrichtung das Wärmebild, hinsichtlich seiner zeitlichen Entwicklung (1. Ableitung) erfasst und auswertet und aus der ortsbezogenen Veränderung der Temperatur die dentalen Restaurationen bzw. die für die Prozessführung relevanten Matrixelemente identifiziert und den Dentalofenin Abhängigkeit von diesen Matrixelementen steuert.

In vorteilhafter Ausgestaltung ist es weiter vorgesehen, dass die Steuer- oder Regelvorrichtung das Schließen und/oder Öffnen der Brennhaube in Abhängigkeit von der zeitlichen Entwicklung des Wärmebilds steuert und/oder dass die Steuer- oder Regelvorrichtung die Temperatur in der Brennhaube in Abhängigkeit von der zeitlichen Entwicklung des Wärmebilds steuert bzw. regelt.

In vorteihafter Ausgestaltung ist es auch vorgesehen, dass die Wärmebildkamera hinsichtlich der Temperatur kalibriert ist und jedes Matrixelement als Temperatursensor ausgebildet ist.

In vorteilhafter Ausgestaltung ist es vorgesehen, dass die Schließbewegung der Brennhaube des Ofens und/oder die Temperatur der Brennhaube von der Steuervorrichtung auf Basis der Temperatur, an im Bild ausgewählten Matrixelementen, einem Sollverlauf der Temperatur entsprechend geregelt und/oder gesteuert wird.

In vorteilhafter Ausgestaltung ist es vorgesehen, dass eine Anzeigevorrichtung an dem Dentalofen angebracht oder diesem zugeordnet ist und dass das Wärmebild des erfassten Objekts oder der erfassten Objekte farbig auf der Anzeigevorrichtung dargestellt ist, wobei warme Bereiche rötlicher oder heller und kalte Bereiche bläulicher oder dunkler dargestellt sind, und/oder identifizierte Objekte farblich gekennzeichnet sind und der Hintergrund in Graustufen dargestellt ist, oder dass identifizierte Objekte eingerahmt bzw. erkennbar hervorgehoben werden.

In vorteilhafter Ausgestaltung ist es vorgesehen, dass die Wärmebildkamera seitlich neben dem Bereich oberhalb der Unterlage gelagert ist, und zwar außerhalb des Bewegungsbereichs der Brennhaube, und hinsichtlich ihrer Erfassungsrichtung horizontal, insbesondere orthogonal, auf Objekte ausgerichtet ist, mit einer Toleranz von weniger als 5°.

In vorteilhafter Ausgestaltung ist es vorgesehen, dass die Steuer- oder Regelvorrichtung eine Filtervorrichtung aufweist, die warme Bereiche außerhalb des Bereichs oberhalb der Unterlage, auf der das Objekt aufnehmbar ist, ausblendet.

In vorteilhafter Ausgestaltung ist es vorgesehen, dass ein zusätzlicher Temperaturmessfühler für die Steuerung oder Regelung der Temperatur der Heizvorrichtung des Dentalofens vorgesehen ist, und dass dieser Temperaturmessfühler an die Steuer- bzw. Regelvorrichtung zum Abgleich mit dem Ausgangssignal der Wärmebildkamera angeschlossen ist.

In orteilhafter Ausgestaltung ist es vorgesehen, dass die Steuervorrichtung eine Auswerteeinrichtung aufweist, mit welcher Objekte, insbesondere Dentalrestaurationsteile, aufgrund deren Wärmebilds und dessen zeitlicher Entwicklung bei der Erwärmung, also beim Schließen der Brennhaube, insbesondere hinsichtlich deren Positionen, Formen, Grössen und Anzahl identifizierbar sind.

In vorteilhafter Ausgestaltung ist es vorgesehen, dass die Steuer- oder Regelvorrichtung eine Speichervorrichtung aufweist, in welcher das Wärmebild eines erfassten Objekts und Positionen, an denen dentale Objekte, welche für die Prozessführung als relevant identifiziert wurden, abspeicherbar sind.

In weiterer vorteilhafter Ausgestaltung ist es vorgesehen, dass die Speichervorrichtung das Wärmebild des Objekts während des Trocknungs- bzw. Schliessprozesses und des Brennvorgangs und insbesondere die vorher ermittelten Positionen, an denen dentale Objekte, welche für die Prozessführung relevant sind speichert und diese bereits ermittelten Positionen für weitere Temperaturmessungen über den Trocknungs- bzw. Schliessprozess hinaus, insbesondere während der Abkühlphase (Öffnungsprozess) weiter verwendet.

In vorteilhafter Ausgestaltung ist es auch vorgesehen, dass die Steuervorrichtung eine Auswerteeinrichtung aufweist, mit welcher das Schließen des Brennofens blockierbar ist, wenn die Auswertung des Wärmebilds ergibt, dass die Brennhaube mit dem Objekt beim Schließen kollidieren würde.

In vorteilhafter Ausgestaltung ist es vorgesehen, dass die Wärmeerfassungvorrichtung als Wärmebildkamera ausgebildet ist, auf den Bereich oberhalb der Unterlage gerichtet ist und der Steuer- oder Regelvorrichtung ein mindestens zweidimensionales, in Form einer Matrix vorliegendes Bild des oder der eingestellten Dentalrestaurationsteile zuleitet.

In vorteilhafter Ausgestaltung ist es vorgesehen, dass die Wärmeerfassungsvorrichtung als Wärmebildkamera bei offener Brennhaube oder durch ein geeignetes Sichtfenster hindurch auf den Bereich oberhalb der Unterlage gerichtet ist und eine Steuervorrichtung vorgesehen ist, der die Wärmebildkamera ein mindestens zweidimensionales, in Form einer Matrix vorliegendes Bild zuleitet, das diese mindestens hinsichtlich der Temperatur der erfassten Bereiche der Matrix auswertet.

In vorteilhafter Ausgestaltung ist auch ein Verfahren nach den kennzeichnenden Merkmalen eines der Ansprüche 1 bis 17 vorgesehen.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematische Ansicht eines erfindungsgemäßen Dentalofens mit einer Wärmebildkamera und einer eingebrachten Muffel;
- Fig. 2: ein Wärmebild zu dem Dentalofen in der Ausführungsform gemäß Figur 1 ;
- Fig. 3: eine modifizierte Ausführungsform eines erfindungsgemäßen Dentalofens mit zwei Wärmebildkameras; und
- Fig. 4: Wärmebilder, welche die Erwärmung von Dentalrestaurationsteilen, welche in einem Brennofen eingebracht wurden, zu unterschiedlichen Zeitpunkten t0, t1, t2 zeigt.

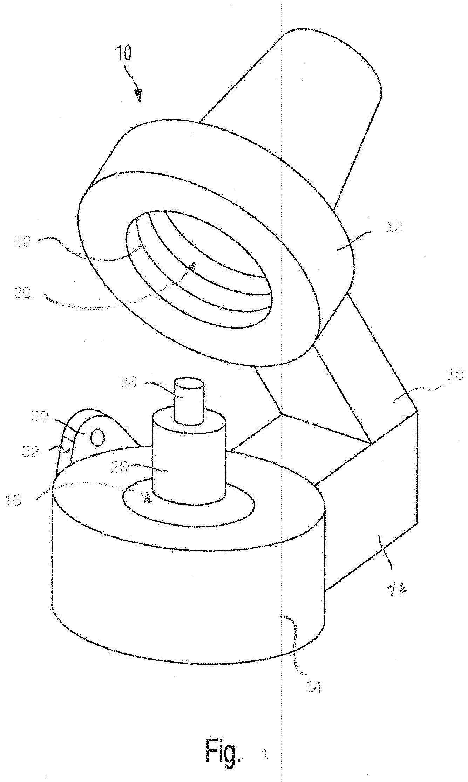

In Fig. 1 ist ein Dentalofen 10 dargestellt, der im Beispielsfall als Pressofen ausgebildet ist.

Der Ofen weist eine Brennhaube 12 und ein Ofenunterteil 14 mit einem Brennraumboden 16 auf. Die Brennhaube 12 ist hub- und schwenkbeweglich an dem Ofenunterteil 14 über ein nicht im Einzelnen und nur schematisch dargestelltes Gelenk 18 gelagert. Sie ist haubenförmig ausgebildet und umgibt damit den Brennraum 20. An ihrem Umfang weist sie in an sich bekannter Weise eine Brennraumheizung 22 auf.

Der Brennraum 20 und auch die Brennhaube 12 sind kreisförmig ausgestaltet, wobei der Brennraum im wesentlichen die Form eines Hohlzylinders hat. Dementsprechend ist er gut für die Aufnahme von zylindrischen Muffeln geeignet, die für das Pressen von Dentalrestaurationsteilen verwendet werden. Eine derartige Muffel 26 ist in Fig. 1 auf dem Brennraumboden 16 abgestellt dargestellt. Für das Herstellen des Dentalrestaurationsteils wird die Muffel in an sich bekannter Weise mit einem Pressling oder Rohling 28 bestückt, dessen Durchmesser in Fig. 1 der Deutlichkeit halber vergrößert dargestellt ist, und der in einen Führungskanal in der Muffel 26 eingeschoben wird.

Das Pressen des Rohlings erfolgt über einen nicht dargestellten Pressantrieb im oberen Teil der Brennhaube 12.

Es versteht sich, dass sowohl der Pressdruck als auch die Temperatur, mit welcher das Pressen durchgeführt wird, besonderen Anforderungen unterliegt, und die diesbezüglichen Parameter genau eingehalten werden müssen. Andererseits wird die Muffel 26 von außen über die Brennraumheizung 22 erwärmt, so dass sich die gewünschte Temperatur in ihrem Inneren, also im Bereich des eingeschobenen Rohlings 28, erst verspätet einstellt.

Wie ersichtlich ist, können mit derartigen Pressöfen Muffeln unterschiedlichen Durchmessers gebrannt werden, beispielsweise auch eine Muffel, die nahezu den doppelten Durchmesser der in Fig. 1 dargestellten Muffel 26 aufweist. Auch die Höhe der verwendeten Muffel kann unterschiedlich sein, so dass sich das zu erwärmende Muffelmaterial von einem zum nächsten Presszyklus um beispielsweise den Faktor 4 unterscheiden kann.

Erfindungsgemäß ist eine Wärmeerfassungsvorrichtung, die als Wärmebildkamera 30 ausgebildet ist, an dem Dentalofen 10 angebracht, und zwar an der Außenseite des Dentalofens, bevorzugt an dem Ofenunterteil 14.

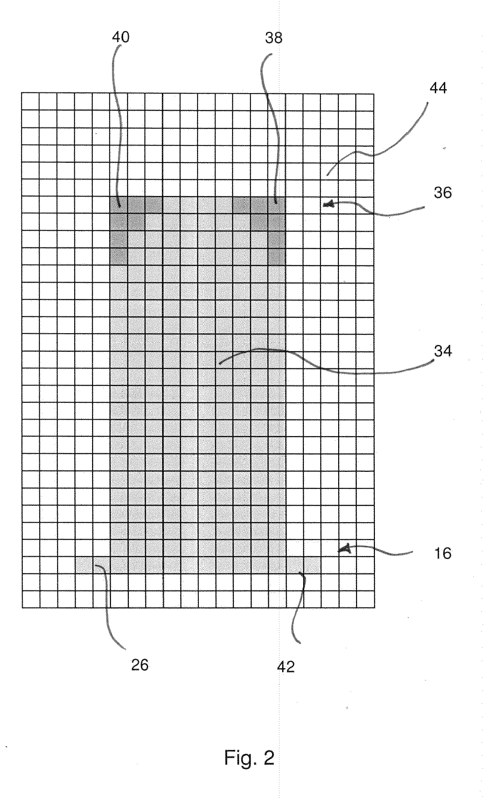

Das Blickfeld der Wärmebildkamera ist auf einen Bereich knapp oberhalb des Brennraumbodens 16 gerichtet, also an die Stelle, an der die Muffel 26 - oder im Falle eines Brennofens das Dentalrestaurationsteil - abgestellt ist. Die Wärmebildkamera 30 ist so eingestellt, dass sie horizontal und vertikal etwas mehr erfasst, als es der größten zu verwendeten Muffel 26 entspricht. Dies ist auch aus der Figur 2 schematisch ersichtlich.

Gegebenenfalls kann der Wärmebildkamera eine Optik vorgesetzt werden, um den Erfassungsbereich nach Bedarf in seiner Grösse und damit seiner Auflösung anzupassen.

Die Wärmebildkamera 30 ist geschützt in einem Rahmen 32 aufgenommen, der auch beim versehentlichen Anstoßen der Muffel 26 keinen Schaden davonträgt. Darüber hinaus ist sie bevorzugt nicht vorne seitlich, sondern hinten seitlich an dem Ofenunterteil 14 angebracht. Dies führt dazu, dass sie zum einen nicht im Weg ist, zum anderen in den freien Raum ausgerichtet ist, in dem typischerweise jedenfalls keine anderen Wärmequellen angeordnet sind.

Bevorzugt ist die Ausrichtung so gewählt, dass die optische Achse der Wärmebildkamera 30 mit der vertikalen Achse des Brennraums 20 zusammenfällt.

Es versteht sich, dass es aber auch möglich ist, die Ausrichtung etwas seitlich versetzt zu wählen, wenn bestimmte Bereiche seitlich an der Muffel besonders untersucht werden sollen. Auch ist es möglich, die optische Achse horizontal zu neigen, im dargestellten Ausführungsbeispiel zweckmäßig etwas nach oben, um so die vertikale Mitte der Muffel 26 besser zu erfassen.

Aus Fig. 2 ist ersichtlich, wie sich ein Wärmebild 34 in der Wärmebildkamera 30 darstellt, wenn eine - beispielsweise in einem Vorwärmofen vorgewärmte - Muffel 26 bei geöffneter Brennhaube 12 und eingeschalteter Brennraumheizung 22 auf dem Brennraumboden 16 abgestellt ist.

Im Vorwärmofen ist die Muffel typischerweise auf eine im wesentlichen gleichmäßige Temperatur erwärmt.

In Fig. 2 ist lediglich eine ganz grobe Wärmeverteilung des Wärmebilds 34 ersichtlich. Es versteht sich, dass Wärmebildkameras typischerweise eine farbvariante Auflösung der Temperatur zeigen, wobei warme Bereiche gelb, heiße Bereiche rot, kühlere Bereiche grün und kalte Bereiche blau dargestellt sind. Das Farbspektrum ist wesentlich stärker aufgelöst als dies hier ersichtlich ist, so dass auch eine Temperaturdifferenz von beispielsweise 2° durch die entsprechende Farbvarianz ersichtlich ist.

Auch ist die Auflösung einer Wärmebildkamera um Größenordnungen größer als es aus den Figuren 2 ersichtlich ist, beispielsweise sind Ausbildungen von 1.000 Pixeln mal 1.500 Pixeln ohne weiteres realisierbar.

Auch aus Fig. 2 ist jedoch ersichtlich, dass die umgebenden Bereiche 44, die in diesen Figuren schraffurfrei dargestellt sind, kalten Bereichen des Wärmebilds 34 entsprechen. Diese werden bei dem echten Wärmebild dann blau dargestellt und zeigen die kalte Umgebung.

Durch den Kontrast zwischen den Bereichen 44 und dem Bereich der Muffel 26 lässt sich ohne weiteres die zweidimensionale Größe der Muffel erkennen und der Dentalofen 10 den Erfordernissen entsprechend steuern und regeln.

Erfindungsgemäß wichtig ist aber auch die zeitabhängige Änderung des Wärmebilds 34, die sich aus dem Vergleich vor und nach dem Einstellen der Muffel ergibt.

Bei der Auswertung des Wärmebilds 34 wird auch ein Plausibilitätstest durchgeführt. Muffeln, aber auch Dentalrestaurationsteile in Brennöfen, haben je eine vorgegebene Form. Wenn heiße Punkte im Bereich 44 des Wärmebilds auftreten, können diese also nicht von der Muffel oder dem Dentalrestaurationsteil stammen und können daher ohne weiteres ausgeblendet werden.

Mit zunehmender Erwärmung steigt der Kontrast zwischen dem Bereich 44 und dem Bereich 26 so dass die Muffelerkennung schärfer wird.

Während hier die Überwachung der Muffel in der Aufheizphase, also beim Schließen der Brennhaube 12, beschrieben ist, versteht es sich, dass es erfindungsmäßig günstig ist, dass die Wärmebildkamera 30 an der vorgegebenen Stelle verbleibt und auch beim Öffnen der Brennhaube 12 eine Wärmebilderfassung vorgenommen wird. Die Muffel muss - störungsfreien Betrieb vorausgesetzt - an der selben Stelle sein, an der sie war, als die Brennhaube geschlossen wurde, und auch hier lässt sich der erwünschte Temperaturverlauf an die Erfordernisse anpassen bzw. das Anheben der Brennhaube 12 und gegebenenfalls die Abschaltung der Brennraumheizung 22 regeln und steuern.

Bei entsprechend feiner Auflösung der Wärmebildkamera lässt sich auch ein etwaiger Muffelriss erfassen, der sich als etwas heißere Linie durch das Wärmebild 34 hindurchziehen würde. Dies würde gleichermaßen für abgeplatzte Gipsstückchen der Muffel gelten, und es könnte in diesem Fall in eine genauere Fehleruntersuchung eingetreten werden.

Auch wenn hier die Wärmebildkamera 30 als einer vorgegebenen Stelle fest montiert dargestellt ist, versteht es sich, dass bei einer alternativen Ausgestaltung auch eine verschwenkbare Lagerung möglich ist. Die Wärmebildkamera kann dann von der 45° Stellung hinten seitlich in die 45° Stellung vorne seitlich, also insgesamt um 90° verschwenkt werden. Dies erlaubt gerade in Brennöfen für Dentalrestaurationsteile die dreidimensionale Erkennung der Dentalrestaurationsteile und insofern gleichsam eine stereoskopische Wärmebildaufnahme.

Die erfindungsgemäße Wärmebildkamera 30 lässt sich damit zur Fehlererkennung, aber auch zur Identifikation der zu brennenden Dentalobjekte ohne weiteres einsetzen.

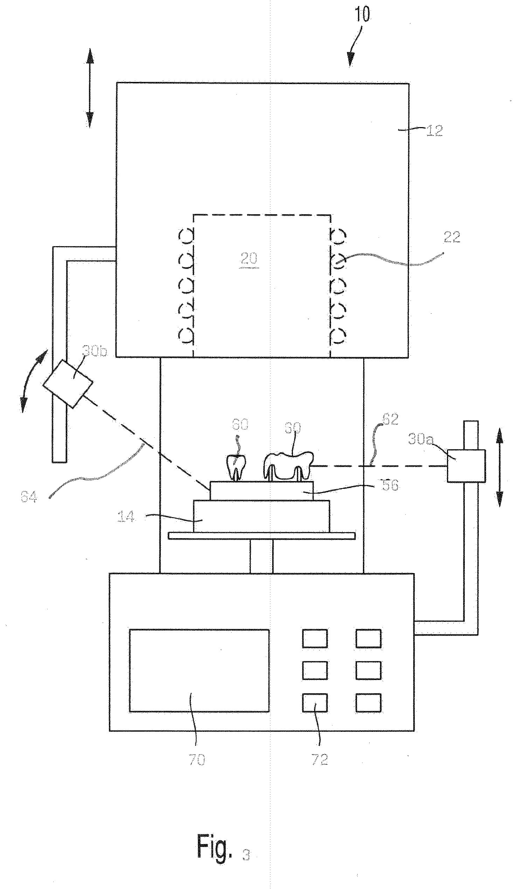

Eine weitere Ausgestaltung einer erfindungsgemäßen Wärmebildkamera ist aus Fig. 3 ersichtlich. Bei dieser Lösung wird ein Brennofen 10 eingesetzt, der Dentalrestaurationsteile 60 aufnimmt, die auf einem Brennteller 56 abgelegt sind, der seinerseits auf dem Ofenunterteil 14 abgestellt ist. Die Brennraumheizung 22 ist in üblicher Weise am Außenumfang des Brennraums 20 angeordnet und strahlt bei geöffneter Brennhaube 12 auch teilweise nach unten ab. Hierdurch werden die Dentalrestaurationsteile 60 auch bei geöffneter Brennhaube 12 erwärmt. Dies lässt sich mit den beiden Wärmebildkameras 30a und 30b erfassen, die im dargestellten Ausführungsbeispiel beweglich gelagert sind. Die Wärmebildkamera 30a ist mit einer horizontalen Sichtachse 62 auf die Dentalrestaurationsteile 60 ausgerichtet und erfasst diese seitlich.

Demgegenüber ist die Wärmebildkamera 30b im dargestellten Ausführungsbeispiel auf den Brennteller 56 ausgerichtet, wobei die Sichtachse 64 demnach knapp unterhalb der Dentalrestaurationsteile 60 auf diesen trifft.

Das Wärmebild der Wärmebildkamera 30b erfasst aber auch die Dentalrestaurationsteile 60, und zwar aufgrund der schrägen Ausrichtung von deren Oberseite. Dies erlaubt eine gemeinsame und auch wiederum dreidimensionale Erfassung des Wärmebildes oder Temperaturbilds der Dentalrestaurationsteile 60.

In an sich bekannter Weise weist das Ofenunterteil 14 eine Anzeigevorrichtung 70 auf. Diese kann - gesteuert durch Steuertasten 72 - auch gleich das Wärmebild der Wärmebildkameras 30a und 30b eingeblendet zeigen. Zusätzlich wird dieses über eine Bilderkennungsvorrichtung ausgewertet und die Steuerung sowohl der Schließbewegung als auch der Zufuhr von Heizenergie an die Erfordernisse angepasst vorgenommen.

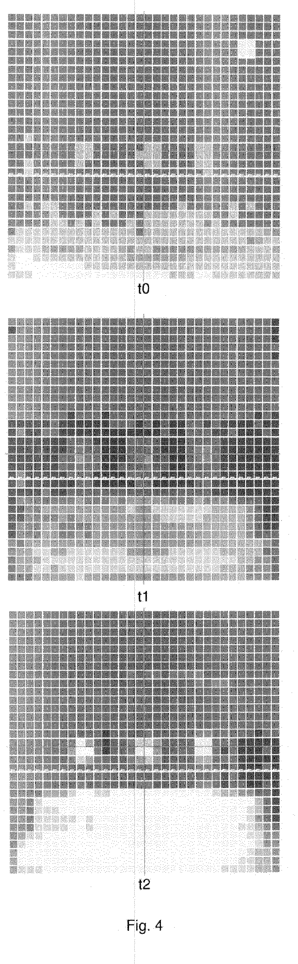

Fig. 4 zeigt 3 Wärmebilder, die zum Zeitpunkt t0, t1 und t2 vom Arbeitsbereich, also den Bereichen oberhalb der Unterlage, erstellt wurden. Für eine einfache Darstellung wurden Schwellwerte für die Temperaturdarstellung im Bild verwendet. Matrixelemente, die eine kleinere Temperatur als der erste vorgegebene Schwellwert besitzen, werden nahezu schwarz, jene mit einer Temperatur über diesem Schwellwert heller dargestellt. Zum Zeitpunkt t0, direkt nach dem Einstellen des Brenngutträgers mit 3 dentalen Restaurationen in den Brennofen sind nahezu keine Temperaturunterschiede erkennbar. Die Objekte heben sich vom Hintergrund nicht ab, da sie eine ähnliche Temperatur haben. In dem gezeigten Bild ist jedoch rechts oben eine Stelle mit hoher Temperatur erkennbar. Da diese nicht plausibel ist, kann nun die Entscheidung getroffen werden, dass dies ein heisses Objekt im Hintergrund ist und daher müssen für die weitere Betrachtung diese Pixel nicht mehr berücksichtigt werden.

Die eingestellten dentalen Objekte selbst werden aber, nachdem diese unterhalb der heissen Ofenhaube eingestellt wurden, zwangsläufig und kontinuierlich erwärmt. Die Erwärmung als solche und die Geschwindigkeit der Erwärmung, und, ob diese kontinuierlich erfolgt, kann durch entsprechende periodische Speicherung der Bilder, in einem vorgegebenen betrachteten Zeitintervall, festgestellt und berechnet werden. Zum Zeitpunkt t1, haben sich, wie ersichtlich ist, teilweise der Brenngutträger und die Objekte bereits erwärmt. Zum Zeitpunkt t2 heben sich alle Objekte deutlich und scharf vom Untergrund ab. Über eine geeignete Wahl des erwähnten Schwellwertes kann natürlich eine Erkennung von Objekten zeitlich sehr schnell und genau erfolgen, so dass sie eventuell schon im Zeitpunkt t1 möglich wäre. Die im Zeitpunkt t0 dargestellte Hintergrundstörung wurde entweder tatsächlich entfernt, oder wird von der Software ausgeblendet und in der Bilddarstellung nicht mehr berücksichtigt.

In einer modifizierten Ausgestaltung, die hier nicht zeichnerisch dargestellt ist, ist die Brennhaube fest und die Unterlage beweglich. Auch insofern ist die Brennhaube relativ zu der Unterlage beweglich gelagert. Die Unterlage kann beispielsweise vertikal bewegt werden, so dass die Brennkammer in der obersten Position der Unterlage geschlossen ist und in einer unteren Position der Unterlage die Dentalrestaurationsteile entnommen werden können. Durch die Bewegung der Unterlage werden diese allerdings automatisch erschüttert, so dass diese Ausführungsform nicht bevorzugt ist.

In einer weiter modifizierten Ausführungsform ist anstelle der Brennhaube eine geschlossene Brennkammer vorgesehen, die seitlich über eine Ofentür zugänglich ist. Auch hier ist eine Unterlage in Form des dortigen Ofenbodens realisiert, die für die Aufnahme eines oder mehrerer Dentalrestaurationsteile bestimmt ist. Die Wärmebildkamera kann bei dieser Lösung an der Ofentür angebracht sein, oder an einer fixen Position außerhalb der Ofentür, so dass der Ofeninnenraum erfasst wird. Durch Bildanalyse lässt sich hier die Erwärmung der dort befindlichen Dentalrestaurationsteile erfassen.

In einer weiter modifizierten Ausgestaltung ist bei dieser Lösung ein für Infrarotstrahlung durchlässiges Sichtfenster im rückwertigen Bereich der Ofenwand vorgesehen. Die Wärmebildkamera ist auf dieses Fenster gerichtet, so dass der Innenraum der Brennkammer erfasst wird, und bei offener Ofentür der umgehende Raum. Durch diese Lösung gegen sich stärkere Konstraste zwischen den heißen Dentalrestaurationsteilen und der Umgebungsluft.

## Patentansprüche

1. Dentalofen, mit einer mit einer Heizvorrichtung ausgestatteten Brennhaube, die relativ zu einer zur Aufnahme eines Dentalrestaurationsteils bestimmten Unterlage für das Öffnen und Schließen des Dentalofens beweglich gelagert ist, und mit einer Wärmeerfassungsvorrichtung, die auf einen Bereich oberhalb der Unterlage, insbesondere auf ein oder mehrere Dentalrestaurationsteile, gerichtet ist, und mit einer Steuer- oder Regelvorrichtung für den Dentalofen, an die die Wärmeerfassungsvorrichtung angeschlossen ist, wobei die Wärmeerfassungsvorrichtung als Wärmebildkamera (30) ausgebildet ist, die bei teilweise oder vollständig offener Brennhaube (12) auf den Bereich oberhalb der Unterlage gerichtet ist und der Steuer- oder Regelvorrichtung ein mindestens zweidimensionales, in Form einer Matrix vorliegendes Bild des oder der eingestellten Dentalrestaurationsteile (60) und/oder einer für die Erzeugung der Dentalrestaurationsteile (60) bestimmten Muffel (26) zuleitet.

2. Dentalofen nach Anspruch 1, **dadurch gekennzeichnet, dass** die Steuervorrichtung die einzelnen Matrixelemente der Matrix sowohl hinsichtlich der erfassten Temperatur als auch hinsichtlich der Anordnung, also, an welchen Stellen warme Bereiche (44, 26) sind und an welchen nicht, auswertet, und für eine Prozessführung als relevant oder nicht relevant identifiziert.

3. Dentalofen nach einem der vorhergehenden Ansprüche, **dadurch gekennzeichnet, dass** die Steuer- oder Regelvorrichtung das Wärmebild (34) des erfassten Objekts, insbesondere des erfassten Dentalrestaurationsteils (60), hinsichtlich seiner relativen Lage bezogen auf die Unterlage und/oder die Brennhaube (12) und damit den Dentalofen (10) erfasst und auswertet.

4. Dentalofen nach einem der vorhergehenden Ansprüche, **dadurch gekennzeichnet, dass** die Steuer- oder Regelvorrichtung das Wärmebild (34), hinsichtlich seiner zeitlichen Entwicklung (1. Ableitung) erfasst und auswertet und aus der ortsbezogenen Veränderung der Temperatur die dentalen Restaurationen bzw. die für die Prozessführung relevanten Matrixelemente identifiziert und den Dentalofen (10) in Abhängigkeit von diesen Matrixelementen steuert.

5. Dentalofen nach Anspruch 4, **dadurch gekennzeichnet, dass** die Steuer- oder Regelvorrichtung das Schließen und/oder Öffnen der Brennhaube (12) in Abhängigkeit von der zeitlichen Entwicklung des Wärmebilds (34) steuert und/oder dass die Steueroder Regelvorrichtung die Temperatur in der Brennhaube (12) in Abhängigkeit von der zeitlichen Entwicklung des Wärmebilds (34) steuert bzw. regelt.

6. Dentalofen nach einem der vorhergehenden Ansprüche, **dadurch gekennzeichnet, dass** die Wärmebildkamera (30) hinsichtlich der Temperatur kalibriert ist und jedes Matrixelement als Temperatursensor ausgebildet ist.

7. Dentalofen nach einem der vorhergehenden Ansprüche, **dadurch gekennzeichnet, dass** die Schließbewegung der Brennhaube (12) des Ofens und/oder die Temperatur der Brennhaube (12) von der Steuervorrichtung auf Basis der Temperatur, an im Bild ausgewählten Matrixelementen, einem Sollverlauf der Temperatur entsprechend geregelt und/oder gesteuert wird.

8. Dentalofen nach einem der vorhergehenden Ansprüche, **dadurch gekennzeichnet, dass** eine Anzeigevorrichtung (70) an dem Dentalofen (10) angebracht oder diesem zugeordnet ist und dass das Wärmebild (34) des erfassten Objekts oder der erfassten Objekte farbig auf der Anzeigevorrichtung (70) dargestellt ist, wobei warme Bereiche (44, 26) rötlicher oder heller und kalte Bereiche (44, 26) bläulicher oder dunkler dargestellt sind, und/oder identifizierte Objekte farblich gekennzeichnet sind und der Hintergrund in Graustufen dargestellt ist, oder dass identifizierte Objekte eingerahmt bzw. erkennbar hervorgehoben werden.

9. Dentalofen nach einem der vorhergehenden Ansprüche, **dadurch gekennzeichnet, dass** die Wärmebildkamera (30) seitlich neben dem Bereich oberhalb der Unterlage gelagert ist, und zwar außerhalb des Bewegungsbereichs der Brennhaube (12), und hinsichtlich ihrer Erfassungsrichtung horizontal, insbesondere orthogonal, auf Objekte ausgerichtet ist, mit einer Toleranz von weniger als 5°.

10. Dentalofen nach einem der vorhergehenden Ansprüche, **dadurch gekennzeichnet, dass** die Steuer- oder Regelvorrichtung eine Filtervorrichtung aufweist, die warme Bereiche (44, 26) außerhalb des Bereichs oberhalb der Unterlage, auf der das Objekt aufnehmbar ist, ausblendet.

11. Dentalofen nach einem der vorhergehenden Ansprüche, **dadurch gekennzeichnet, dass** ein zusätzlicher Temperaturmessfühler für die Steuerung oder Regelung der Temperatur der Heizvorrichtung des Dentalofens (10) vorgesehen ist, und dass dieser Temperaturmessfühler an die Steuer- bzw. Regelvorrichtung zum Abgleich mit dem Ausgangssignal der Wärmebildkamera (30) angeschlossen ist.

12. Dentalofen nach einem der vorhergehenden Ansprüche, **dadurch gekennzeichnet, dass** die Steuervorrichtung eine Auswerteeinrichtung aufweist, mit welcher Objekte, insbesondere Dentalrestaurationsteile (60), aufgrund deren Wärmebilds (34) und dessen zeitlicher Entwicklung bei der Erwärmung, also beim Schließen der Brennhaube (12), insbesondere hinsichtlich deren Positionen, Formen, Grössen und Anzahl identifizierbar sind.

13. Dentalofen nach einem der vorhergehenden Ansprüche, **dadurch gekennzeichnet, dass** die Steuer- oder Regelvorrichtung eine Speichervorrichtung aufweist, in welcher das Wärmebild (34) eines erfassten Objekts und Positionen, an denen dentale Objekte, welche für die Prozessführung als relevant identifiziert wurden, abspeicherbar sind.

14. Dentalofen nach Anspruch 13, **dadurch gekennzeichnet, dass** die Speichervorrichtung das Wärmebild (34) des Objekts während des Trocknungs- bzw. Schliessprozesses und des Brennvorgangs und insbesondere die vorher ermittelten Positionen, an denen dentale Objekte, welche für die Prozessführung relevant sind speichert und diese bereits ermittelten Positionen für weitere Temperaturmessungen über den Trocknungs-bzw. Schliessprozess hinaus, insbesondere während der Abkühlphase (Öffnungsprozess) weiter verwendet.

15. Dentalofen nach einem der vorhergehenden Ansprüche, **dadurch gekennzeichnet, dass** die Steuervorrichtung eine Auswerteeinrichtung aufweist, mit welcher das Schließen des Brennofens blockierbar ist, wenn die Auswertung des Wärmebilds (34) ergibt, dass die Brennhaube (12) mit dem Objekt beim Schließen kollidieren würde,

16. Verfahren zum Steuern eines Dentalofens, der über eine mit einer Heizvorrichtung ausgestattete schließbare Brennhaube ein Dentalrestaurationsteil erwärmt, wobei eine Wärmeerfassungsvorrichtung auf einen Bereich oberhalb einer Unterlage, die mit dem Dentalofen im Übrigen verbunden ist, gerichtet ist, wobei die Wärmeerfassungsvorrichtung als Wärmebildkamera (30) bei offener Brennhaube (12) oder durch ein geeignetes Sichtfenster hindurch auf den Bereich oberhalb der Unterlage gerichtet ist und eine Steuervorrichtung vorgesehen ist, der die Wärmebildkamera (30) ein mindestens zweidimensionales, in Form einer Matrix vorliegendes Bild zuleitet, das diese mindestens hinsichtlich der Temperatur der erfassten Bereiche (44, 26) der Matrix auswertet.

17. Verfahren nach Anspruch 16, ausgeführt an einem Dentalofen **gekennzeichnet durch** die kennzeichnenden Merkmale eines der Ansprüche 1 bis 15.

## Claims

1. A dental oven, having a firing hood which is equipped with a heating device and Is movably mounted relative to a base designed for receiving a dental restoration part for opening and closing the dental oven, and having a heat detection device which is directed towards a region above the base, in particular towards one or more dental restoration parts, and having a control or regulating device for the dental oven, to which the heat detection device is connected, the heat detection device being designed as a thermal imaging camera (30) which, when the firing hood (12) is partially or completely open, is directed onto the region above the base, and supplying an at least two-dimensional image, present in the form of a matrix, of the set dental restoration part or parts.(60) and/or of a muffle (26) intended for producing the dental restoration parts (60) to the control or regulating device.

2. The dental oven according to claim 1, **characterized in that** the control device evaluates the individual matrix elements of the matrix both in view of the temperature detected, and the arrangement, i.e. at which locations therein warm regions (44, 26) exist and at which regions there are no warm regions, and identifying them as being relevant for process control or not being relevant.

3. The dental oven according to one of the preceding claims, **characterized in that** the control or regulating device detects and evaluates the thermal image (34) of the detected object, in particular of the detected dental restoration part (60), In view of the relative position thereof relative to the base and/or the firing hood (12) and thus the dental oven (10).

4. The dental oven according to one of the preceding claims, **characterized in that** the control or regulating device detects and evaluates the thermal image (34) In view of the development in time thereof (first derivative) and identifies the dental restorations or the matrix elements relevant to process control from the location-related change in temperature, and controls the dental oven (10) as a function of said matrix elements.

5. The dental oven according to Claim 4, **characterized in that** the control or regulating device controls closing and/or opening of the combustion hood (12) as a function of the development in time of the thermal image (34) and/or **in that** the control or regulating device controls or regulates the temperature in the combustion hood (12) as a function of the development in time of the thermal image (34).

6. The dental oven according to one of the preceding claims, **characterized in that** the thermal imaging camera (30) is calibrated in relation to the temperature and each matrix element is formed as a temperature sensor.

7. The dental oven according to one of the preceding claims, **characterized in that** the closing movement of the firing hood (12) of the oven and/or the temperature of the firing hood (12) is regulated and/or controlled by the control device on the basis of the temperature, on matrix elements selected in the Image, according to a set course of the temperature.

8. The dental oven according to one of the preceding claims, **characterized In that** a display device (70) Is attached to or associated with the dental oven (10) and **in that** the thermal image (34) of the detected object or objects is displayed in color on the display device (70), wherein warm areas (44, 26) are displayed more red or In lighter color, and cold areas (44, 26) are displayed more blue or in darker color, and/or identified objects are displayed in color and the background is displayed in grey scales, or **in that** identified objects are framed or recognizably highlighted, respectively.

9. The dental oven according to one of the preceding claims, **characterized In that** the thermal imaging camera (30) is mounted laterally adjacent to the region above the support, i.e. outside the range of movement of the firing hood (12), and is oriented towards objects horizontally, in particular orthogonally, with respect to its direction of detection, with a tolerance of less than 5°.

10. The dental oven according to one of the preceding claims, **characterized in that** the control device comprises a filter device which suppresses warm areas (44, 26) outside the area above the base on which base the object can be received.

11. The dental oven according to one of the preceding claims, **characterized in that** an additional temperature sensor Is provided for controlling or regulating the temperature of the heating device of the dental oven (10), and **in that** said temperature sensor Is connected to the control device for compensation with the output signal of the thermal imaging camera (30).

12. The dental oven according to one of the preceding claims, **characterized in that** the control device has an evaluation device with which objects, In particular dental restoration parts (60), can be Identified on the basis of their thermal image (34) and the development In time during heating, i.e. during closing of the firing hood (12), in particular with regard to their positions, shapes, sizes and number.

13. The dental oven according to one of the preceding claims, **characterized in that** the control or regulating device comprises a storage device in which the thermal Image (34) of a detected object, and positions at which dental objects which have been identified as relevant for process control can be stored.

14. The dental oven according to claim 13, **characterised in that** the storage device stores the thermal image (34) of the object during the drying or closing process and the firing process and in particular the previously determined positions at which dental objects which are relevant for the process control are stored, and furthermore using said positions having already been determined for other temperature measurements, besides the drying or closing process, in particular during the cooling phase (opening process).

15. The dental oven according to one of the preceding claims, **characterized in that** the control device has an evaluation device with which the closure of the furnace can be blocked If the evaluation of the thermal image (34) shows that the firing hood (12) would collide with the object during closure.

16. A method for controlling a dental oven which heats a dental restoration part, via a closable firing hood equipped with a heating device, wherein a heat detection device is directed towards a region above a base, which base is otherwise connected to the dental furnace, wherein the heat detection device is directed as a thermal imaging camera (30) onto the region above the base, with the combustion hood (12) being open, or through a suitable viewing window, and a control device is provided, to which the thermal imaging camera (30) supplies an at least two-dimensional Image, which is present in the form of a matrix, and which evaluates this at least with respect to the temperature of the detected regions (44, 26) of the matrix.

17. The method according to claim 16, carried out on a dental oven **characterized by** the characteristic features of one of the claims 1 to 15.

## Revendications

1. Four dentaire, avec une cloche de cuisson équipée d'un dispositif de chauffage qui par rapport à un support prévu pour recevoir une pièce de restauration dentaire est montée de manière mobile pour l'ouverture et la fermeture du four dentaire et avec un dispositif de détection de chaleur, qui est dirigé vers une zone au-dessus du support, en particulier vers une ou plusieurs pièces de restauration dentaire, et avec un dispositif de commande ou de réglage pour le four dentaire, auquel le détecteur de chaleur est relié, où le détecteur de chaleur est formé comme caméra thermique (30), qui lors de l'ouverture partielle ou entière de la cloche de cuisson (12) est dirigé sur la zone située au-dessus du support et dirige une Image de la pièce ou des pièces de restauration dentaire (60) sous forme d'une matrice en au moins deux dimensions vers le dispositif de commande ou de réglage et et/ou un moufle (26) pour la production de pièces de restauration dentaire (60).

2. Four dentaire selon la revendication 1, **caractérisé en ce que** le dispositif de commande évalue les éléments de matrice individuels de la matrice, aussi bien la température enregistrée que la distribution, c'est-à-dire les endroits présentant des zones chaudes (44, 26) ou non et les identifie comme pertinents ou non pertinents pour le processus.

3. Four dentaire selon l'une des revendications précédentes, **caractérisé en ce que** le dispositif de commande ou de réglage capte et évalue l'Image thermique (34) de l'objet détecté, en particulier de la pièce de restauration dentaire (60), en ce qui concerne son positionnement relatif au support ou la cloche de cuisson (12) et donc le four dentaire (10).

4. Four dentaire selon l'une des revendications précédentes, **caractérisé en ce que** le dispositif de commande ou de réglage capte et évalue l'image thermique (34), par rapport à son évolution temporelle (1 dérivation) et à partir des changements de température localement identifie les restaurations dentaires ou les éléments de matrice pertinents pour la gestion du processus et gère le four dentaire (10) en fonction de ces éléments de la matrice,

5. Four dentaire selon la revendication 4, **caractérisé en ce que** le dispositif de commande ou de réglage commande la fermeture et/ou l'ouverture de la cloche de cuisson (12) en fonction de l'évolution temporelle de l'Image thermique (34) et/ou que le dispositif de commande ou de réglage commande ou régule la température dans la cloche de cuisson (12) selon l'évolution dans le temps de l'image thermique (34).

6. Four dentaire selon l'une des revendications précédentes, **caractérisé en ce que** la caméra thermique (30) est calibrée en ce qui concerne la température et chaque élément de matrice est formé comme capteur de température.

7. Four dentaire selon l'une des revendications précédentes, **caractérisé en ce que** la manoeuvre de fermeture de la cloche de cuisson (12) du four et/ou la température de la cloche de cuisson (12) est réglée ou commandée par le dispositif de commande selon un trajectoire de température cible sur la base de la température, sur des éléments de matrice sélectionnées dans l'image.

8. Four dentaire selon l'une des revendications précédentes, **caractérisé en ce qu'**un dispositif d'affichage (70) est attaché au four dentaire (10) ou associé à celui-ci et que l'image thermique (34) de l'objet détecté ou des objets détectés s'affiche en couleur sue le dispositif d'affichage (70) où des régions chaudes (44, 26) sont affichées plutôt rougeâtres ou claires et des régions froides (44, 26) sont affichées plutôt bleuâtres ou foncées, et/ou les objets détectés sont codés par couleurs et le fond est affiché en niveaux de gris, ou que les objets détectés sont encadrées ou clairement mis en évidence.

9. Four dentaire selon l'une des revendications précédentes, **caractérisé en ce que** la caméra thermique (30) est monté latéralement adjacente à la zone située au-dessus du support, c'est-à-dire à l'extérieur de l'amplitude de mouvement de la cloche de cuisson (12) et en ce qui concerne la direction de détection est dirigée horizontalement, en particulier orthogonalement sur les objets avec une tolérance inférieure à 5°.

10. Four dentaire selon l'une des revendications précédentes, **caractérisé en ce que** le dispositif de commande ou réglage présente un dispositif de filtrage qui masque les réglons chaudes (44, 26) en dehors de la zone située au-dessus du support, sur lequel l'objet peut être reçu.

11. Four dentaire selon l'une des revendications précédentes, **caractérisé en ce qu'**une sonde de température supplémentaire pour la commande ou régulation de la température du dispositif de chauffage du four dentaire (10) est fournie et que ce capteur de température est connecté au dispositif de commande ou de réglage pour la mise en correspondance avec le signal de sortie de la caméra thermique (30).

12. Four dentaire selon l'une des revendications précédentes, **caractérisé en ce que** le dispositif de commande dispose d'un dispositif d'évaluation avec lequel des objets, en particulier des pièces de restauration dentaire (60), peuvent être identifiés en raison de leur image thermique (34) et son évolution temporelle au cours du réchauffement, c'est à dire tors de la fermeture de la cloche de cuisson (12), en particulier par rapport à leur position, forme, taille et nombre.

13. Four dentaire selon l'une des revendications précédentes, **caractérisé en ce que** le dispositif de commande ou réglage dispose d'un périphérique de stockage, dans lequel l'image thermique (34) d'un objet détecté et des positions des objets dentaires pertinentes pour la gestion du processus peuvent être stockés.

14. Four dentaire selon la revendication 13, **caractérisé en ce que** le périphérique de stockage stocke l'image thermique (34) de l'objet pendant le processus de séchage ou de fermeture et du processus de cuisson et en particulier les positions des objets dentaires déterminées précédemment, pertinentes pour la gestion du processus, et utilise ces positions déterminées précédemment pour d'autres mesures de la température au cours du processus de séchage ou de fermeture, en particulier pendant la phase de refroidissement (processus d'ouverture).

15. Four dentaire selon l'une des revendications précédentes, **caractérisé en ce que** le dispositif de commande comprend un dispositif d'évaluation, avec lequel la fermeture du four peut être bloquée si l'évaluation de l'image thermique (34) indique que la cloche de cuisson (12) pourrait entrer en collision avec l'objet lors de la fermeture.

16. Procédure pour commander un four dentaire, qui chauffe une pièce de restauration dentaire par une cloche de cuisson équipée d'un dispositif de chauffage verrouillable, où un dispositif de détection de la chaleur est dirigé sur une zone au-dessus d'un support, qui est par ailleurs connecté au four dentaire, où le dispositif de détection de la chaleur est dirigé comme camera thermique (30) avec la cloche de cuisson ouverte (12), ou à travers une fenêtre sur la zone située au-dessus du support et un dispositif de commande est fourni vers lequel la caméra thermique (30) dirige une image sous forme d'une matrice en au moins deux dimensions que celui-ci évalue au moins en ce qui concerne la température des zones détectées (44, 26 de la matrice).

17. Procédure de la revendication 16, exécutée sur un four dentaire **caractérisé par** les traits caractéristiques des revendications 1 à 15.
